# EUROPEAN PATENT APPLICATION

(11) **EP 4 546 452 A1**
(43) Date of publication of application: **30.04.2025**
(21) Application number: 22948450.6
(22) Date of filing: 30.06.2022
(51) Int. Cl.: H01M 4/36

(54) **ELECTROCHEMICAL DEVICE AND ELECTRONIC DEVICE**

(71) Applicant: Ningde Amperex Technology Limited, Ningde, Fujian 352100 (CN)
(72) Inventor: YUAN, Guoxia, Ningde, Fujian 352100 (CN); LANG, Ye, Ningde, Fujian 352100 (CN); XU, Leimin, Ningde, Fujian 352100 (CN)
(74) Representative: Icosa
(86) International application number: PCT/CN2022/102571
(87) International publication number: WO 2024/000336

(57) **Abstract**

This application provides an electrochemical device and an electronic device. The electrochemical device includes a positive electrode, a negative electrode, and an electrolyte; where the positive electrode includes a positive electrode active material layer, the positive electrode active material layer includes a positive electrode active material, and the positive electrode active material includes a first positive electrode active material and a second positive electrode active material; after the electrochemical device is fully discharged, a Raman spectrum of the positive electrode active material layer has a first characteristic peak at a wavelength ranging from 398 cm⁻¹ to 408 cm⁻¹ and a second characteristic peak at a wavelength ranging from 940 cm⁻¹ to 960 cm⁻¹; and the second positive electrode active material includes element aluminum. The electrochemical device provided in this application has both high energy density and good high-temperature cycling performance.

## Description

### TECHNICAL FIELD

This application pertains to the technical field of electrochemistry, and specifically relates to an electrochemical device and an electronic device.

### BACKGROUND

In recent years, electrochemical devices represented by lithium-ion batteries have the advantages such as high operating voltage, environmental friendliness, small volume, light weight, and long cycle life, and have developed rapidly in the fields of portable consumer electronics, new energy vehicles, and large-scale energy storage. Lithium iron phosphate is widely used as a positive electrode material of electrochemical devices such as lithium-ion batteries due to its excellent cycling performance and safety performance. With the increasing popularity of new energy vehicles, the demand for longer cruising range has put forward higher requirements for the energy density and cycling performance of batteries.

### SUMMARY

The purpose of this application is to provide an electrochemical device and an electronic device, aiming to increase the energy density of the electrochemical device and enhance its high-temperature cycling performance.

A first aspect of this application provides an electrochemical device including a positive electrode, a negative electrode, and an electrolyte; where the positive electrode includes a positive electrode active material layer, the positive electrode active material layer includes a positive electrode active material, and the positive electrode active material includes a first positive electrode active material and a second positive electrode active material; after the electrochemical device is fully discharged, a Raman spectrum of the positive electrode active material layer has a first characteristic peak at a wavelength ranging from 398 cm⁻¹ to 408 cm⁻¹ and a second characteristic peak at a wavelength ranging from 940 cm⁻¹ to 960 cm⁻¹; and the second positive electrode active material includes element aluminum. The first characteristic peak is a characteristic peak of the second positive electrode active material, and the second characteristic peak is a characteristic peak of the first positive electrode active material. The second positive electrode active material has a relatively high gram capacity, and the element aluminum therein can enhance the stability of the manganese-oxygen bonds of the second positive electrode active material during cycling, which can provide the positive electrode active material layer with better structural stability, increase the energy density of the electrochemical device, and improve its high-temperature cycling performance.

In some embodiments of this application, after the electrochemical device is fully discharged, the Raman spectrum of the positive electrode active material layer has a third characteristic peak at a wavelength ranging from 591 cm⁻¹ to 611 cm⁻¹, and a full width at half maximum of the third characteristic peak is 15 cm⁻¹ to 60 cm⁻¹, and the third characteristic peak is a characteristic peak of the second positive electrode active material. With the full width at half maximum of the third characteristic peak falling within the range, it indicates that the second positive electrode active material has a stable crystal structure, which can inhibit the structural phase transition of the material during cycling, enhance the structural stability of the material, and improve the cycling performance of the electrochemical device.

In any embodiment of this application, a full width at half maximum of the first characteristic peak is 15 cm⁻¹ to 60 cm⁻¹, a full width at half maximum of the second characteristic peak is 5 cm⁻¹ to 25 cm⁻¹, and the full width at half maximum of the first characteristic peak is greater than the full width at half maximum of the second characteristic peak. The second positive electrode active material has lower crystallinity than the first positive electrode active material, so its full width at half maximum is relatively large; while the first positive electrode active material has a relatively small full width at half maximum, good crystallinity, and small structural changes during charging and discharging. Active ions inside the second positive electrode active material compensate for the loss of active ions on the surface of a negative electrode active material, ensuring the transmission of active ions, which is beneficial to improving the cycling performance of the electrochemical device.

In any embodiment of this application, the first positive electrode active material includes element iron, and the second positive electrode active material includes element manganese. The second positive electrode active material has a relatively high gram capacity, which can provide the electrochemical device with a relatively high specific discharge capacity. A synergistic effect occurs between the first positive electrode active material and the second positive electrode active material. During the charging and discharging process of the electrochemical device, active ions in the second positive electrode active material are deintercalated, and can effectively compensate for the irreversible loss of active ions on the surface of the negative electrode active material. The remaining active ions can be intercalated in the first positive electrode active material, which effectively increases the capacity of the positive electrode active material and improves the cycling performance of the electrochemical device.

In any embodiment of this application, the positive electrode active material layer includes element manganese, and based on a mass of the element manganese in the positive electrode active material layer, a mass fraction ω_{Al} of the element aluminum meets: 0.1% ≤ ω_{Al} ≤ 5%. With the mass fraction of the element aluminum meeting the foregoing relationship, the stability of the manganese-oxygen bonds in the second positive electrode active material can be enhanced, thereby improving the cycling performance of the electrochemical device.

In any embodiment of this application, based on a mass of the positive electrode active material layer, a mass percentage ω_{Mn} of the element manganese and a mass percentage ω_{Fe} of the element iron meet: 0.01% ≤ ω_{Mn}/ω_{Fe} ≤ 30%, and preferably, 1% ≤ ω_{Mn}/ω_{Fe} ≤ 25%. With the mass percentages of the element manganese and the element iron falling within the foregoing ranges, the energy density of the electrochemical device can be further increased and the cycling performance of the electrochemical device can be improved.

In any embodiment of this application, the positive electrode active material layer includes element M, and the element M is selected from one or more of Nb, Mg, Ti, W, Ga, Zr, W, Y, V, Sr, Mo, Cr, Sn, La, and Ce. After the element M is added to the second positive electrode active material, the stability of the manganese-oxygen bonds inside the material can be enhanced, the dissolution of the element manganese can be inhibited, the cycling performance of the electrochemical device can be further enhanced, and the energy density of the electrochemical device can be increased.

In any embodiment of this application, based on a mass of the positive electrode active material layer, a mass percentage ω_{M} of the element M meets: 0.03% < ω_{M} ≤ 2.5%. With the mass percentage of the element M falling within this range, the cycling performance of the electrochemical device can be more effectively improved and the energy density of the electrochemical device can be increased.

In any embodiment of this application, the electrolyte includes an additive, where the additive includes fluorinated carbonate and/or an inorganic lithium salt. The fluorinated carbonate and/or the inorganic lithium salt help form a dense and stable interface film on the surface of the positive electrode active material, further enhancing the protection of the positive electrode active material and improving the cycling performance of the electrochemical device.

In any embodiment of this application, based on a mass of the electrolyte, a mass percentage of the additive is 0.01% to 10%. The mass percentage of the additive in the electrolyte falls within a suitable range, which helps to form an interface film of appropriate thickness on the surface of the positive electrode active material and a relatively low impedance, further improving the cycling performance of the electrochemical device.

In any embodiment of this application, the fluorinated carbonate includes at least one of fluoroethylene carbonate or fluoropropylene carbonate.

In any embodiment of this application, the inorganic lithium salt includes at least one of lithium difluorophosphate or lithium tetrafluoroborate.

In any embodiment of this application, based on the mass of the electrolyte, a mass percentage of the fluorinated carbonate is 0.01% to 8%.

In any embodiment of this application, based on the mass of the electrolyte, a mass percentage of the fluorinated carbonate is 0.01% to 5%.

In any embodiment of this application, based on the mass of the electrolyte, a mass percentage of the inorganic lithium salt is 0.01% to 3%.

In any embodiment of this application, based on the mass of the electrolyte, a mass percentage of the inorganic lithium salt is 0.01% to 1.5%.

According to a second aspect of this application provides an electronic device including the electrochemical device according to the first aspect of this application.

### BRIEF DESCRIPTION OF DRAWINGS

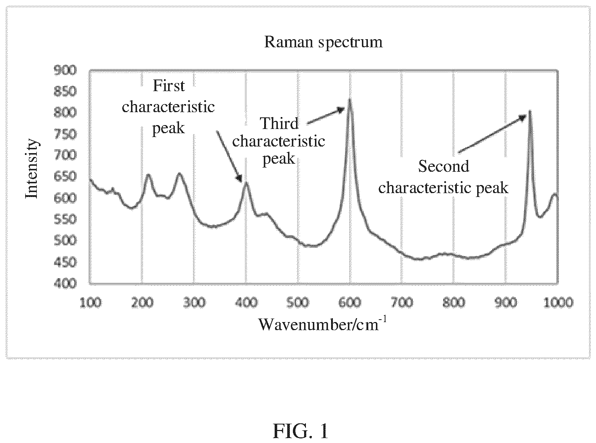

FIG. 1 is a Raman spectrum of a positive electrode active material layer of Example 1.

### DESCRIPTION OF EMBODIMENTS

To make the objectives, technical solutions, and advantages of this application clearer, the following clearly and completely describes the technical solutions in this application with reference to some embodiments. Apparently, the described embodiments are some but not all embodiments of this application. The relevant embodiments described herein are illustrative in nature and used to provide a basic understanding of this application. Some embodiments of this application should not be construed as limitations on this application. All other embodiments obtained by those skilled in the art based on the technical solutions provided by this application and the given embodiments without creative efforts shall fall within the protection scope of this application.

For brevity, this specification specifically discloses only some numerical ranges. However, any lower limit may be combined with any upper limit to form a range not expressly recorded; any lower limit may be combined with any other lower limit to form a range not expressly recorded; and likewise, any upper limit may be combined with any other upper limit to form a range not expressly recorded. In addition, each individually disclosed point or single numerical value, as a lower limit or an upper limit, may be combined with any other point or single numerical value or combined with another lower limit or upper limit to form range not expressly recorded.

In the descriptions of this specification, "more than" or "less than" is inclusive of the present number unless otherwise specified.

Unless otherwise specified, terms used in this application have common meanings generally understood by persons skilled in the art. Unless otherwise specified, numerical values of parameters mentioned in this application may be measured by using various measurement methods commonly used in the art (for example, testing may be performed by using a method provided in some embodiments of this application).

A list of items connected by the terms "at least one of", "at least one piece of", "at least one kind of", or the like may mean any combination of the listed items. For example, if items A and B are listed, the phrase "at least one of A and B" means only A, only B, or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain a single composition or a plurality of compositions. The item B may contain a single composition or a plurality of compositions. The item C may contain a single composition or a plurality of compositions.

### Electrochemical device

A first aspect of some embodiments of this application provides an electrochemical device including any device in which an electrochemical reaction occurs to convert chemical energy and electrical energy into each other, and specific examples of which include but are not limited to lithium-ion batteries.

The electrochemical device of this application includes a positive electrode, a negative electrode, and an electrolyte; where the positive electrode includes a positive electrode active material layer, the positive electrode active material layer includes a positive electrode active material, and the positive electrode active material includes a first positive electrode active material and a second positive electrode active material; after the electrochemical device is fully discharged, a Raman spectrum of the positive electrode active material layer has a first characteristic peak at a wavelength ranging from 398 cm⁻¹ to 408 cm⁻¹ and a second characteristic peak at a wavelength ranging from 940 cm⁻¹ to 960 cm⁻¹; and the second positive electrode active material includes element aluminum. The Raman spectrum of the positive electrode active material layer has the first characteristic peak at the wavelength ranging from 398 cm⁻¹ to 408 cm⁻¹ and the second characteristic peak at the wavelength ranging from 940 cm⁻¹ to 960 cm⁻¹, where the first characteristic peak is a characteristic peak corresponding to the second positive electrode active material, and the second characteristic peak is a characteristic peak corresponding to the first positive electrode active material. Because the second positive electrode active material has a relatively high gram capacity, the positive electrode active material containing the second positive electrode active material and the first positive electrode active material also has a relatively high gram capacity, which is further conducive to increasing the energy density of the electrochemical device. The second positive electrode active material includes the element aluminum, and the element aluminum can improve the bond length fluctuation of the manganese-oxygen bonds of the second positive electrode active material during cycling and further enhance the stability of the manganese-oxygen bonds, and thereby improve the cycling performance of the electrochemical device. Meanwhile, with the synergistic effect of the first positive electrode active material and the second positive electrode active material, the positive electrode active material layer can have better structural stability, and the electrochemical device has high energy density and high-temperature cycling performance.

In some embodiments of this application, the first characteristic peak at the wavelength ranging from 398 cm⁻¹ to 408 cm⁻¹ is a characteristic peak generated by the stretching vibration of the Mn-O bonds in the second positive electrode active material, and the second characteristic peak at the wavelength ranging from 940 cm⁻¹ to 960 cm⁻¹ is a characteristic peak generated by an internal mode of (PO₄)³⁻ in the first positive electrode active material.

In this application, the fully discharged electrochemical device means that an electrochemical device is charged at a constant current of 0.2C to 3.65 V, next charged at a constant voltage to a current of 0.05C, left standing for 5 min, and then discharged at a constant current of 0.2C to 2.5 V; and after the foregoing charging and discharging process is cycled twice, the resulting electrochemical device is in the fully discharged state.

In some embodiments of this application, the full width at half maximum of the first characteristic peak may be 15 cm⁻¹ to 60 cm⁻¹, the full width at half maximum of the second characteristic peak may be 5 cm⁻¹ to 25 cm⁻¹, and the full width at half maximum of the first characteristic peak may be greater than the full width at half maximum of the second characteristic peak. For example, the full width at half maximum of the first characteristic peak may be 15 cm⁻¹, 25 cm⁻¹, 38 cm⁻¹, 45 cm⁻¹, 52 cm⁻¹, 60 cm⁻¹, or in a range defined by any two of these values. The full width at half maximum of the second characteristic peak may be 5 cm⁻¹, 8 cm⁻¹, 12 cm⁻¹, 16 cm⁻¹, 22 cm⁻¹, 25 cm⁻¹, or in a range defined by any two of these values. The second positive electrode active material has lower crystallinity than the first positive electrode active material, so its full width at half maximum is relatively large; while the first positive electrode active material has a relatively small full width at half maximum, good crystallinity, and small structural changes during charging and discharging. The active ions inside the second positive electrode active material compensate for the loss of active ions on the surface of the negative electrode active material, so that there are enough active ions to be intercalated back into the second positive electrode active material, ensuring the transmission of active ions, which is conducive to improving the cycling performance of the electrochemical device.

In some embodiments of this application, after the electrochemical device is fully discharged, the Raman spectrum of the positive electrode active material layer has a third characteristic peak at a wavelength ranging from 591 cm⁻¹ to 611 cm⁻¹, and a full width at half maximum of the third characteristic peak may be 15 cm⁻¹ to 60 cm⁻¹. For example, the full width at half maximum of the third characteristic peak may be 15 cm⁻¹, 25 cm⁻¹, 40 cm⁻¹, 45 cm⁻¹, 54 cm⁻¹, 60 cm⁻¹, or in a range defined by any two of these values. With the full width at half maximum of the third characteristic peak falling within the range, it indicates that the second positive electrode active material has a stable crystal structure, which can inhibit the structural phase transition of the material during cycling, enhance the structural stability of the material, and improve the cycling performance of the electrochemical device.

In the electrochemical device of this application, the third characteristic peak is a characteristic peak corresponding to the second positive electrode active material. As can be seen from FIG. 1, the Raman spectrum of the positive electrode active material layer of Example 1 provided in this application has the first characteristic peak, the second characteristic peak, and the third characteristic peak.

In this application, the Raman spectrum of the positive electrode active material layer and the full widths at half maximum of the first characteristic peak, the second characteristic peak, and the third characteristic peak have well-known meanings in the art and can be tested by methods known in the art. For example, a lithium-ion battery is charged at a constant current of 0.2C to 3.65 V, next charged at a constant voltage to a current of 0.05C, left standing for 5 min, and then discharged at a constant current of 0.2C to 2.5 V; and the foregoing process is cycled twice in total. After completion, the lithium-ion battery is disassembled, and a positive electrode plate is taken out and soaked in DMC (dimethyl carbonate) for 30 minutes to remove the electrolyte and by-products on the surface of the positive electrode plate, and then dried in a fume hood for 4 hours. The dried positive electrode plate is sliced using an ion polishing machine (JEOL-IB-09010CP), and tested using a Raman spectrometer (model HR Evolution) at a wavenumber ranging from 150 cm⁻¹ to 1200 cm⁻¹. Slices of 2 cm × 2 cm are selected, and an average value of the spectral lines is taken to obtain a Raman spectrum. The full width at half maximum refers to a full width of a spectral band when height of a characteristic peak band is half of the maximum height, which is a peak width when the peak height is half.

In some embodiments, the first positive electrode active material includes element iron, and the second positive electrode active material includes element manganese. The first positive electrode active material in the positive electrode active material includes an olivine structure, which has a relatively stable structure; during the charging and discharging process of the electrochemical device, the first positive electrode active material has relatively small volume changes, in other words, the intercalation and deintercalation of active ions have little effect on the structure of the first positive electrode active material; and it has good charge and discharge reversibility. The second positive electrode active material has a relatively high gram capacity, which can provide the electrochemical device with a relatively high specific discharge capacity. The electrochemical device of this application can fully utilize the synergistic effect between the first positive electrode active material and the second positive electrode active material. During the charging and discharging process of the electrochemical device, active ions in the second positive electrode active material are deintercalated, some of these active ions can deposit on the negative electrode, which can effectively compensate for the irreversible loss of active ions on the surface of the negative electrode active material caused by repairing the SEI film, and the remaining active ions can be intercalated in the first positive electrode active material, which effectively improves the cycling performance of the electrochemical device.

In some embodiments, the first positive electrode active material includes but is not limited to lithium iron phosphate and a composite material of a lithium iron phosphate and carbon.

In some embodiments, the positive electrode active material layer includes element manganese, and based on a mass of the element manganese in the positive electrode active material layer, a mass fraction ω_{Al} of the element aluminum meets: 0.1% ≤ ω_{Al} ≤ 5%. For example, based on the mass of the element manganese in the positive electrode active material layer, the mass fraction ω_{Al} of the element aluminum meets: 0.15% ≤ ω_{Al} ≤ 5%, 0.8% ≤ ω_{Al} ≤ 5%, 1.2% ≤ ω_{Al} ≤ 5%, 2.6% ≤ ω_{Al} ≤ 5%, 3.5% ≤ ω_{Al} ≤ 5%, 4% ≤ ω_{Al} ≤ 5%, 0.2% ≤ ω_{Al} ≤ 4%, 0.9% ≤ ω_{Al} ≤ 4%, 1.5% ≤ ω_{Al} ≤ 4%, 2.5% ≤ ω_{Al} ≤ 4%, 3% ≤ ω_{Al} ≤ 4%, 0.3% ≤ ω_{Al} ≤ 3%, 1% ≤ ω_{Al} ≤ 3%, 1.6% ≤ ω_{Al} ≤ 3%, 0.8% ≤ ω_{Al} ≤ 2%, or 0.1% ≤ ω_{Al} ≤ 1%. Preferably, based on a mass of the element manganese in the positive electrode active material layer, the mass fraction ω_{Al} of the element aluminum meets: 0.3% ≤ ω_{Al} ≤ 3%. The element aluminum is closely related to a peak position of the first characteristic peak of the second positive electrode active material. When the mass fraction of the element aluminum meets the foregoing relationship, the peak position of the first characteristic peak shifts to the right, which can enhance the stability of the manganese-oxygen bonds in the second positive electrode active material, thereby improving the high-temperature cycling performance of the electrochemical device. If the doping amount of the element aluminum in the second positive electrode active material is too large, the element aluminum will occupy the active sites of the active ions, resulting in a decrease in the gram capacity of the second positive electrode active material, which is inconducive to increasing the energy density of the electrochemical device.

In some embodiments, based on a mass of the positive electrode active material layer, a mass percentage ω_{Mn} of the element manganese and a mass percentage ω_{Fe} of the element iron meet: 0.01% ≤ ω_{Mn}/ω_{Fe} ≤ 30%. The mass percentage ω_{Mn} of the element manganese and the mass percentage ω_{Fe} of the element iron may reflect the mass percentages of the second positive electrode active material and the first positive electrode active material in the positive electrode active material. A higher mass percentage ω_{Mm} of the element manganese indicates a higher mass percentage of the second positive electrode active material in the positive electrode active material. Based on the high gram capacity of the second positive electrode active material, the electrochemical device has a high specific discharge capacity; the active ions of the second positive electrode active material are deintercalated and deposited on the negative electrode during the cycling process of the electrochemical device, and can compensate for the loss of active ions on the surface of the negative electrode active material. When the second positive electrode active material in the positive electrode active material has a relatively high mass percentage, it can provide more deintercalatable active ions, which can not only effectively compensate for the loss of active ions on the surface of the negative electrode active material but also ensure that there are enough active ions to be intercalated into the second positive electrode active material, ensuring the transmission of active ions, effectively increasing the cycle capacity retention rate of the electrochemical device, increasing the energy density of the electrochemical device, and improving the cycling performance of the electrochemical device. Compared with the first positive electrode active material, the mass percentage of the second positive electrode active material should not be too high. When the second positive electrode active material has a too high mass percentage, the second positive electrode active material will provide too many deintercalatable and compensable active ions. When the amount of active ions deintercalated exceeds the amount that can be intercalated into the positive electrode active material layer, internal resistance will be increased, and the specific discharge capacity of the electrochemical device will be decreased. Therefore, with the mass percentages of the second positive electrode active material and the first positive electrode active material in the positive electrode active material, that is, the mass percentage ω_{Mn} of the element manganese and the mass percentage ω_{Fe} of the element iron being controlled within the foregoing range, the cycling performance of the electrochemical device can be effectively improved and the energy density of the electrochemical device can be increased.

In some embodiments, the mass percentage ω_{Mn} of the element manganese and the mass percentage ω_{Fe} of the element iron meet: 0.05% ≤ ω_{Mn}/ω_{Fe} ≤ 30%, 0.1% ≤ ω_{Mn}/ω_{Fe} ≤ 30%, 0.5% ≤ ω_{Mn}/ω_{Fe} ≤ 30%, 1% ≤ ω_{Mn}/ω_{Fe} ≤ 30%, 5% ≤ ω_{Mn}/ω_{Fe} ≤ 30%, 10% ≤ ω_{Mn}/ω_{Fe} ≤ 30%, 15% ≤ ω_{Mn}/ω_{Fe} ≤ 30%, 20% ≤ ω_{Mn}/ω_{Fe} ≤ 30%, 25% ≤ ω_{Mn}/ω_{Fe} ≤ 30%, 0.05% ≤ ω_{Mn}/ω_{Fe} ≤ 25%, 0.1% ≤ ω_{Mn}/ω_{Fe} ≤ 25%, 0.5% ≤ ω_{Mn}/ω_{Fe} ≤ 25%, 1% ≤ ω_{Mn}/ω_{Fe} ≤ 25%, 5% ≤ ω_{Mn}/ω_{Fe} ≤ 25%, 10% ≤ ω_{Mn}/ω_{Fe} ≤ 25%, 15% ≤ ω_{Mn}/ω_{Fe} ≤ 25%, 20% ≤ ω_{Mn}/ω_{Fe} ≤ 25%, 0.05% ≤ ω_{Mn}/ω_{Fe} ≤ 20%, 0.1% ≤ ω_{Mn}/ω_{Fe} ≤ 20%, 0.5% ≤ ω_{Mn}/ω_{Fe} ≤ 20%, 1% ≤ ω_{Mn}/ω_{Fe} ≤ 20%, 5% ≤ ω_{Mn}/ω_{Fe} ≤ 20%, 10% ≤ ω_{Mn}/ω_{Fe} ≤ 20%, 15% ≤ ω_{Mn}/ω_{Fe} ≤ 20%, 0.05% ≤ ω_{Mn}/ω_{Fe} ≤ 15%, 0.1% ≤ ω_{Mn}/ω_{Fe} ≤ 15%, 0.5% ≤ ω_{Mn}/ω_{Fe} ≤ 15%, 1% ≤ ω_{Mn}/ω_{Fe} ≤ 15%, 5% ≤ ω_{Mn}/ω_{Fe} ≤ 15%, 10% ≤ ω_{Mn}/ω_{Fe} ≤ 15%, 0.05% ≤ ω_{Mn}/ω_{Fe} ≤ 10%, 0.1% ≤ ω_{Mn}/ω_{Fe} ≤ 10%, 0.5% ≤ ω_{Mn}/ω_{Fe} ≤ 10%, 1% ≤ ω_{Mn}/ω_{Fe} ≤ 10%, 5% ≤ ω_{Mn}/ω_{Fe} ≤ 10%, 0.05% ≤ ω_{Mn}/ω_{Fe} ≤ 5%, 0.1% ≤ ω_{Mn}/ω_{Fe} ≤ 5%, 0.5% ≤ CO_{Mn}/CO_{Fe} ≤ 5%, 1% ≤ ω_{Mn}/ω_{Fe} ≤ 5%, 0.05% ≤ ω_{Mn}/ω_{Fe} ≤ 1%, 0.1% ≤ ω_{Mn}/ω_{Fe} ≤ 1%, or 0.05% ≤ ω_{Mn}/ω_{Fe} ≤ 0.1%. Preferably, the mass percentage ω_{Mn} of the element manganese and the mass percentage ω_{Fe} of the element iron meet: 1% ≤ ω_{Mn}/ω_{Fe} ≤ 25%. In this case, the electrochemical device has better cycling performance and high energy density.

In some embodiments, the positive electrode active material layer includes element M, and the element M is selected from one or more of Nb, Mg, Ti, W, Ga, Zr, W, Y, V, Sr, Mo, Cr, Sn, La, and Ce. For example, the element M may be Nb, Ga, Mo, or V, or may be W and Y, or may be La and Ce. The element M may alternatively be any one or more of the foregoing elements. After adding the element M to the second positive electrode active material, the stability of the manganese-oxygen bonds inside the material can be enhanced, the dissolution of the element manganese can be inhibited, and the high-temperature cycling performance of the electrochemical device can be further improved. Meanwhile, the element M can also increase the content of deintercalatable active ions in the second positive electrode active material, so that the second positive electrode active material provides enough active ions that can be deintercalated to compensate for the loss of active ions on the surface of the negative electrode active material, and still has enough active ions that can be intercalated into the positive electrode active material layer, further improving the capacity and energy density of the electrochemical device.

In some embodiments, based on a mass of the positive electrode active material layer, a mass percentage ω_{M} of the element M meets: 0.03% < ω_{M} ≤ 2.5%. For example, the mass percentage ω_{M} of the element M meets: 0.05% ≤ ω_{M} ≤ 1.5%, 0.1% ≤ ω_{M} ≤ 1.5%, 0.5% ≤ ω_{M} ≤ 1.5%, 1% ≤ ω_{M} ≤ 1.5%, 0.05% ≤ ω_{M} ≤ 1%, 0.1% ≤ ω_{M} ≤ 1%, or 0.5% ≤ ω_{M} ≤ 1%. The mass percentage ω_{M} of the element M meeting: 0.03% < ω_{M} ≤ 2.5% is conducive to further enhancing the stability of the manganese-oxygen bonds and inhibiting the dissolution of manganese, and also conducive to keeping the content of deintercalatable lithium in the second positive electrode active material within a suitable range, so that the second positive electrode active material has enough active ions to compensate for the loss of active ions on the surface of the negative electrode active material, and also has enough active ions to be intercalated into the positive electrode active material layer, further increasing the energy density of the electrochemical device and improving the high-temperature cycling performance of the electrochemical device. In some embodiments, based on the mass of the positive electrode active material layer, the mass percentage ω_{M} of the element M meets: 0.03% < ω_{M} ≤ 1.5%, which is more conducive to increasing the energy density of the electrochemical device and improving the high-temperature cycling performance of the electrochemical device.

In this application, the types of elements in the positive electrode active material layer can be tested using methods known in the art. For example, the positive electrode plate obtained through disassembling the lithium-ion battery is dried, the dried positive electrode plate is sliced using an ion polishing machine (JEOL-IB-09010CP), then the cross-section of the slice is observed using a scanning electron microscope (SEM) to find particles in the cross-section, and the types of elements in the positive electrode active material layer are determined using an energy dispersive spectrometer (EDS) after testing.

In this application, the content of elements in the positive electrode active material layer can be tested using methods known in the art. For example, the positive electrode plate obtained through disassembling the lithium-ion battery is washed with DMC, the active material layer of the positive electrode plate washed with DMC is scraped off with a scraper, dissolved with a mixed solvent (for example, 0.4 g of the positive electrode active material layer is dissolved with a mixed solvent of 10 mL aqua regia (mixed in a 1:1 ratio of nitric acid and hydrochloric acid) and 2 mL HF), and diluted to 100 mL, and then the mass percentages of elements Mn, Fe, Al, M, and other elements in the solution are tested using an ICP (Inductively Coupled Plasma, inductively coupled plasma) analyzer.

In some embodiments, for example, the second positive electrode active material may be prepared by the following method: MnOOH is placed in a corundum crucible, heated to 500°C at a heating rate of 5°C/min in an air atmosphere, and kept at this constant temperature for 1 h to obtain anhydrous Mn₃O₄. The anhydrous Mn₃O₄ and LiOH are weighed based on a molar ratio of Li:Mn of 1.05:1, nano-Al₂O₃ is added based on an element mass ratio of Al:Mn of 0.0163:1, nano-MgO is added based on an element mass ratio of Mg:Mn of 0.008:1, and elements M such as Nb, Ti, W, Ga, Zr, W, Y, V, Sr, Mo, Cr, Sn, La, and Ce may also be added in a certain proportion. These substances are mixed into uniformity using a sand mill to obtain a mixture precursor. The precursor is placed in a corundum crucible, in which nitrogen is introduced at a rate of 2 m³/h; and then the corundum crucible is heated to 940°C at a heating rate of 5°C/min, kept at this constant temperature for 10 h, and then naturally cooled to room temperature to obtain the second positive electrode active material. Mn₃O₄ may also be replaced with MnO₂, and the ratio of Mn to LiOH is corrected based on the Mn content.

In some embodiments, the positive electrode active material layer may optionally include a conductive agent and a binder. The specific types of the conductive agent and the binder are not specifically limited and can be selected according to needs. For example, the conductive agent includes but is not limited to at least one of conductive graphite, super conductive carbon, acetylene black, carbon black, Ketjen black, carbon dots, carbon nanotubes, graphene, or carbon nanofibers. For example, the binder includes but is not limited to at least one of styrene-butadiene rubber (SBR), water-based acrylic resin (Water based acrylic resin), carboxymethyl cellulose (CMC), polyvinylidene fluoride (PVDF), polytetrafluoroethylene (PTFE), polyvinyl butyral (PVB), ethylene-vinyl acetate copolymer (EVA), or polyvinyl alcohol (PVA).

In this application, the positive electrode is a positive electrode plate, and the positive electrode plate further includes a positive electrode current collector. The positive electrode active material layer is disposed on at least one surface of the positive electrode current collector.

In some embodiments, the positive electrode current collector may be a metal foil or a porous metal plate, such as a foil or a porous plate made of metal such as aluminum, copper, nickel, titanium, silver, or alloys thereof. For example, the positive electrode current collector is an aluminum foil.

In some embodiments, the positive electrode current collector has two opposite surfaces in its thickness direction, and the positive electrode active material layer is disposed on either or both of the two opposite surfaces of the positive electrode current collector. When the positive electrode active material layer is disposed on both surfaces of the positive electrode current collector, the parameters of the positive electrode active material layer on either surface meet the parameter range of this application, which is considered to fall within the protection scope of this application.

The positive electrode plate may be prepared using a conventional method in the art. Generally, the first positive electrode active material, the second positive electrode active material, and the optional conductive agent and binder are dispersed in a solvent, which may be N-methylpyrrolidone (NMP), to prepare a uniform positive electrode slurry. The positive electrode slurry is applied on the positive electrode current collector for processes such as drying and cold pressing, and then the positive electrode plate is obtained.

The positive electrode plate of this application does not exclude other additional functional layers besides the positive electrode active material layer. For example, in some embodiments, the positive electrode plate of this application further includes a conductive undercoat layer (for example, composed of a conductive agent and a binder) sandwiched between the positive electrode current collector and the positive electrode active material layer and disposed on a surface of the positive electrode current collector. In some other embodiments, the positive electrode plate of this application further includes a protective layer covering a surface of the positive electrode active material layer.

In this application, the electrolyte serves to conduct active ions between the positive electrode and the negative electrode.

In some embodiments, the electrolyte includes an additive, where the additive may include fluorinated carbonate and/or an inorganic lithium salt. For example, the additive may include both fluorinated carbonate and an inorganic lithium salt, or may include either of the fluorinated carbonate and the inorganic lithium salt.

In some embodiments, the fluorinated carbonate includes at least one of fluoroethylene carbonate or fluoropropylene carbonate.

In some embodiments, the inorganic lithium salt includes at least one of lithium difluorophosphate or lithium tetrafluoroborate.

The additive included in the electrolyte of this application helps to form a dense and stable interface film on the surface of the positive electrode active material, further enhancing the protection of the positive electrode active material, inhibiting side reactions between the electrolyte and the positive electrode active material, reducing interface impedance, and improving the high-temperature cycling performance of the electrochemical device.

In some embodiments, based on a mass of the electrolyte, a mass percentage of the additive is 0.01% to 10%. The mass percentage of the additive is 0.05%, 0.1%, 0.5%, 1%, 2%, 3%, 4%, 5%, 6%, 6%, 8%, 10%, or in the range defined by any two of these values.

In this application, the mass percentage of the additive in the electrolyte falls within a suitable range, which helps to form an interface film of appropriate thickness on the surface of the positive electrode active material and a relatively low impedance, which is conducive to improving the cycling performance of the electrochemical device. If the mass percentage of the additive is too low, the interface film formed on the surface of the positive electrode active material will be insufficient, affecting the performance of the electrochemical device; if the mass percentage of the film-forming additive is too high, the impedance of the electrolyte will increase, and the migration rate of active ions will decrease, affecting the high-temperature cycling performance of the electrochemical device.

In some embodiments, a mass percentage of the fluorinated carbonate may be 0.01% to 8%, which can further enhance the high-temperature cycling performance of the electrochemical device.

In some embodiments, a mass percentage of the fluorinated carbonate may be 0.01% to 5%, which can further enhance the high-temperature cycling performance of the electrochemical device.

In some embodiments, a mass percentage of the inorganic lithium salt may be 0.01% to 3%, which can further enhance the high-temperature cycling performance of the electrochemical device.

In some embodiments, a mass percentage of the inorganic lithium salt may be 0.01% to 1.5%, which can further enhance the high-temperature cycling performance of the electrochemical device.

In some embodiments, the electrolyte further includes an organic solvent and other optional additives. The types of the organic solvent and other additives are not specifically limited and can be selected according to needs.

In some embodiments, for example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), or diethyl sulfone (ESE)). The foregoing organic solvents may be used alone, or two or more of them may be used together. Optionally, the foregoing organic solvents may be used together in two or more combinations.

In some embodiments, the other additives may include an additive that can improve certain performances of the battery, such as an additive that improves the overcharge performance of the battery, and an additive that improves the high-temperature or low-temperature performance of the battery.

The electrolyte may be prepared using a conventional method in the art. For example, the additive, organic solvent, and other optional additives can be mixed into uniformity to obtain the electrolyte. The order of addition of the materials is not specifically limited. For example, the additive and other optional additives are added to the organic solvent and mixed into uniformity to obtain the electrolyte.

In this application, the negative electrode is a negative electrode plate. The negative electrode plate may be a metal lithium plate, or may be an electrode plate including a negative electrode current collector and a negative electrode active material layer disposed on at least one surface of the negative electrode current collector. The negative electrode active material layer usually includes a negative electrode active material and an optional conductive agent, binder, and thickener.

The materials, composition, and manufacturing methods of the negative electrode plate used in this application may include any known techniques in the prior art.

The specific type of the negative electrode active material is not specifically limited, and may be selected based on needs. For example, the negative electrode active material includes but is not limited to at least one of natural graphite, artificial graphite, a mesocarbon microbead (MCMB), hard carbon, soft carbon, silicon, a silicon-carbon composite, SiO, a Li-Sn alloy, a Li-Sn-O alloy, Sn, SnO, SnO2, a spinel-structure Li₄Ti₅O₁₂, or a Li-Al alloy.

The specific types of the conductive agent are not specifically limited and can be selected according to needs. For example, the conductive agent includes but is not limited to at least one of conductive graphite, super conductive carbon, acetylene black, carbon black, Ketjen black, carbon dots, carbon nanotubes, graphene, or carbon nanofibers.

The specific types of the binder are not specifically limited and can be selected according to needs. For example, the binder includes but is not limited to at least one of styrene-butadiene rubber (SBR), polyvinylidene fluoride (PVDF), polytetrafluoroethylene (PTFE), polyvinyl butyral (PVB), water-based acrylic resin (Water-based acrylic resin), or carboxymethyl cellulose.

The specific types of the thickener are not specifically limited and can be selected according to needs. For example, the thickener includes but is not limited to sodium carboxymethyl cellulose (CMC).

However, this application is not limited to the above-described materials, and the negative electrode plate of this application may alternatively be made of other well-known materials that may be used as the negative electrode active material, the conductive agent, the binder, and the thickener.

In some embodiments, the negative electrode current collector has two opposite surfaces in its thickness direction, and a negative electrode film layer is disposed on either or both of the two opposite surfaces of the negative electrode current collector.

The negative electrode current collector may be a metal foil or a porous metal plate, such as a foil or a porous plate made of metal such as copper, nickel, titanium, iron, or alloys thereof. For example, the negative electrode current collector is a copper foil.

The negative electrode plate may be prepared using a conventional method in the art. Generally, the negative electrode material and the optional conductive agent, binder, and thickener are dispersed in a solvent, where the solvent may be N-methylpyrrolidone (NMP) or deionized water, to prepare a uniform negative electrode slurry, and then the negative electrode slurry is applied onto the negative electrode current collector, followed by processes such as drying and cold pressing, to obtain a negative electrode plate.

The negative electrode plate of this application does not exclude other additional functional layers besides the negative electrode active material layer. For example, in some embodiments, the negative electrode plate of this application further includes a conductive undercoat layer (for example, composed of a conductive agent and a binder) sandwiched between the negative electrode current collector and the negative electrode active material layer and disposed on the surface of the negative electrode current collector. In some other embodiments, the negative electrode plate of this application further includes a protective layer covering the surface of the negative electrode active material layer.

In this application, the electrochemical device further includes a separator. The separator is sandwiched between the positive electrode plate and the negative electrode plate to mainly prevent short circuit between the positive and negative electrodes and allow active ions to pass through. This application has no specific limitation on a type of the separator, and any well-known porous separator with good chemical stability and mechanical stability can be selected.

In some embodiments, the material of the separator may include one or more of glass fiber, non-woven fabric, polyethylene, polypropylene, and polyvinylidene fluoride, but is not limited to these. The separator may be a single-layer thin film or a multi-layer composite thin film. When the separator is a multi-layer composite thin film, each layer is made of the same or different materials. In some embodiments, a ceramic coating layer or a metal oxide coating layer may also be arranged on the separator.

### Electronic device

A second aspect of some embodiments of this application provides an electronic device including the electrochemical device according to the first aspect of some embodiments of this application, where the electrochemical device can be used as a power source in the electronic device.

The electronic device of this application is not particularly limited, and the electronic device may be any known electronic device used in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

### Examples

The following examples more specifically describe the content disclosed by the present invention. These examples are only for illustrative purposes, as various modifications and changes within the scope of the disclosed content of the present invention are apparent to those skilled in the art. Unless otherwise stated, all parts, percentages, and ratios reported in the following examples are based on mass, all reagents used in the examples are commercially available or synthesized in a conventional method, and can be used directly without further treatment, and all instruments used in the examples are commercially available.

### Example 1

### Preparation of positive electrode plate

A first positive electrode active material LiFePO₄ and a second positive electrode active material were mixed into uniformity at a mass ratio of 92:8 and sintered at 300°C for 2 h in a nitrogen atmosphere to obtain a positive electrode active material; where the second positive electrode active material was prepared as follows: MnOOH was placed in a corundum crucible, heated to 500°C at a heating rate of 5°C/min in an air atmosphere, and kept at this constant temperature for 1 h to obtain anhydrous Mn₃O₄. The anhydrous Mn₃O₄ and LiOH were weighed at a molar ratio of Li:Mn of 1.05:1, next nano-Al₂O₃ was added at an element mass ratio of Al:Mn of 0.0163:1, and then nano-MgO was added at an element mass ratio of Mg:Mn of 0.008:1. The foregoing substances were mixed into uniformity using a sand mill to obtain a mixture precursor. The precursor was placed in a corundum crucible, and nitrogen was introduced at a rate of 2 m³/h. The corundum crucible was heated to 940°C at a heating rate of 5°C/min, kept at this constant temperature for 10 h, and then naturally cooled to room temperature to obtain the second positive electrode active material.

The positive electrode active material, a conductive agent Super P, and a binder polyvinylidene fluoride were mixed at a mass ratio of 96:2.4:1.6, N-methylpyrrolidone (NMP) was added, and the resulting mixture was stirred in a vacuum mixer until the system became uniform to obtain a positive electrode slurry, where the solid content of the positive electrode slurry was 70wt%. The positive electrode slurry was evenly applied on one surface of a positive electrode current collector aluminum foil with a thickness of 10 µm, and the aluminum foil was dried at 85°C to obtain a positive electrode plate with a coating thickness of 65 µm and one surface coated with a positive electrode active material layer. The same steps were repeated on the other surface of the aluminum foil to obtain a positive electrode plate coated with the positive electrode active material layer on two surfaces. After cold pressing, cutting, and slitting, drying was performed in vacuum at 85°C for 4 h to obtain a 74 mm × 867 mm positive electrode plate.

### Preparation of negative electrode plate

A negative electrode active material artificial graphite, a conductive agent Super P, a thickener sodium carboxymethyl cellulose (CMC), and a binder styrene-butadiene rubber (SBR) were mixed at a mass ratio of 96.4:1.5:0.5:1.6, deionized water is added, and the resulting mixture was stirred in a vacuum mixer to obtain a negative electrode slurry, where the solid content of the negative electrode slurry was 70wt%. The negative electrode slurry was evenly applied on one surface of a negative electrode current collector copper foil with a thickness of 10 µm, and the copper foil was dried at 85°C to obtain a negative electrode plate with a coating thickness of 63 µm and one surface coated with a negative electrode active material layer. The foregoing steps were repeated on the other surface of the aluminum foil to obtain a negative electrode plate coated with the negative electrode active material layer on two surfaces. After cold pressing, cutting, and slitting, drying was performed in vacuum at 120°C for 12 h to obtain a 79 mm × 972 mm negative electrode plate.

### Preparation of electrolyte

In an argon atmosphere glove box with a moisture content of <10 ppm, chain carbonate DEC and cyclic carbonates EC and PC were mixed at a mass ratio of 1:1:1 to obtain a base solvent, and then a lithium salt LiPF₆ was added to the base solvent, dissolved, and mixed uniformly. Based on a mass of the electrolyte, a mass percentage of LiPF₆ was 12.5%, or FEC or lithium difluorophosphate was further added to the electrolyte.

### Preparation of separator

Aqueous polyvinylidene fluoride, aluminum oxide, and polypropylene were mixed at a mass ratio of 1:8:1, deionized water was added, and the mixture was stirred to obtain a coating slurry with a solid content of 50wt%. The coating slurry was evenly applied on one surface of a PE film with a thickness of 5 µm (provided by Celgard), and dried at 85°C to obtain a single-side coated separator with a coating thickness of 5 µm. The foregoing steps were repeated on the other surface of the separator to obtain a separator with the coating on two surfaces. After processes such as drying and cold pressing, the separator was prepared.

### Preparation of lithium-ion battery

The prepared positive electrode plate, separator, and negative electrode plate were stacked in sequence, so that the separator was sandwiched between the positive electrode plate and the negative electrode plate for separation. Then the stack was wound to obtain an electrode assembly. The electrode assembly was placed into an aluminum-plastic film packaging bag and dried. Then the electrolyte was injected, and processes such as vacuum packaging, standing, formation, degassing, and trimming were performed to obtain a lithium-ion battery. The formation condition was that the lithium-ion battery was charged at a constant current of 0.02C to 3.3 V, next charged at a constant current of 0.1C to 3.6 V, charged at a constant current of 0.2C to 4.2 V, left standing for 10 min, discharged to 2.5 V, left standing for 10 min, and then charged at a constant current of 0.2C to 3.0 V.

### Examples 2 to 25 and Comparative Examples 1 to 2

The preparation method of the lithium-ion battery was similar to that of Example 1, except that the relevant parameters in the preparation process of the positive electrode plate and the electrolyte were adjusted. The specific parameters are shown in Table 1, and "/" indicates that the corresponding component is not added.

### Tests

### (1) Test for specific discharge capacity of lithium-ion battery

For example, a lithium-ion battery was charged at a constant current of 0.2C to 3.65 V, next charged at this constant voltage to a current of 0.05C, left standing for 5 min, and then discharged at a constant current of 0.2C to 2.5 V. The battery was cycled twice according to the foregoing charging and discharging process, and the capacity after the second circle was recorded as D0. The lithium-ion battery was disassembled, and a positive electrode plate was taken out and soaked in DMC (dimethyl carbonate) for 30 minutes to remove the electrolyte and by-products on the surface of the positive electrode plate, and then dried in a fume hood for 4 hours. The electrode plate was burned into powder at 400°C in vacuum, and the mass weighted was m1.

The specific discharge capacity of the lithium-ion battery = D0/m1.

### (2) Test for cycling performance of the lithium-ion battery

The lithium-ion battery was charged at a constant current of 1C to 3.65 V at 45°C, next charged at this constant voltage to a current of 0.05C, left standing for 5 min, and then discharged at a constant current of 1C to 2.5 V. This was one cycle of charging and discharging, and the discharge capacity at this point was recorded as D01. The lithium-ion battery was cycled 1000 times according to the preceding charging and discharging process. The discharge capacity of the 1000th cycle was tested and recorded as D1. The cycle capacity retention rate (%) of the lithium-ion battery = D1/D01×100%.

Tables 1 to 3 show the performance test results of Examples 1 to 25 and Comparative Examples 1 to 2.

**Table 1**

| | Mass fraction of element aluminum (%) | Peak position of first characteristic peak (cm⁻¹) | Peak position of second characteristic peak (cm⁻¹) | Full width at half maximum of first characteristic peak (cm⁻¹) | Full width at half maximum of second characteristic peak (cm⁻¹) | Specific discharge capacity at 25°C at 0.2C (mAh/g) | Energy density (Wh/kg) | Retention rate after 1000 cycles at 45°C (%) |
|---|---|---|---|---|---|---|---|---|
| Example 1 | 1.63 | 402.1 | 947.7 | 25.5 | 10.3 | 155.8 | 498.6 | 92.5 |
| Example 2 | 0.12 | 400.3 | 945.6 | 20.8 | 10.3 | 153.8 | 492.2 | 89.3 |
| Example 3 | 0.63 | 400.9 | 946.5 | 23.5 | 10.3 | 154.4 | 494.1 | 90.5 |
| Example 4 | 1.36 | 401.5 | 947.2 | 24.6 | 10.3 | 155.1 | 496.3 | 91.2 |
| Example 5 | 2.30 | 402.4 | 948.6 | 26.3 | 10.3 | 155.6 | 497.9 | 92.9 |
| Example 6 | 3.50 | 402.8 | 949.4 | 27.9 | 10.3 | 154.4 | 494.1 | 93.4 |
| Example 7 | 4.95 | 403.1 | 951.3 | 29.6 | 10.3 | 152.9 | 489.3 | 94.1 |
| Comparative Example 1 | / | / | 945.2 | / | 10.3 | 149.9 | 479.7 | 87.6 |

FIG. 1 is a Raman spectrum of the positive electrode active material layer of Example 1. As can be seen from FIG. 1, the positive electrode active material layer has a first characteristic peak at a wavelength ranging from 398 cm⁻¹ to 408 cm⁻¹, a second characteristic peak at a wavelength ranging from 940 cm⁻¹ to 960 cm⁻¹, and a third characteristic peak at a wavelength ranging from 591 cm⁻¹ to 611 cm⁻¹. It can be seen from the test results in Table 1 that in Examples 1 to 7, a full width at half maximum of the first characteristic peak of the positive electrode active material layer is 20.8 cm⁻¹ to 29.6 cm⁻¹, and a full width at half maximum of the second characteristic peak is 10.3 cm⁻¹. Because no second positive electrode active material is contained in Comparative Example 1, there is no first characteristic peak in its Raman spectrum, and both the specific discharge capacity and high-temperature cycling performance are low. The foregoing test results show that the specific discharge capacity of lithium-ion battery can be significantly improved through adding the second positive electrode active material containing element aluminum to the positive electrode active material layer. Moreover, with the synergistic effect between the first positive electrode active material and the second positive electrode active material, the loss of active lithium on a surface of the negative electrode active material can be effectively compensated for, which effectively increases the energy density and cycle capacity retention rate of the lithium-ion battery, and improves the high-temperature cycling performance of the lithium-ion battery.

**Table 2**

| | ω_{Mn}/ω_{Fe} (%) | Peak position of third characteristic peak (cm⁻¹) | Full width at half maximum of third characteristic peak (cm⁻¹) | Specific discharge capacity at 25°C at 0.2C | Energy density (Wh/kg) | Retention rate after 1000 cycles at 45°C (%) |
|---|---|---|---|---|---|---|
| Example 1 | 8.55 | 601.1 | 20.9 | 155.8 | 498.6 | 92.5 |
| Example 8 | 3.04 | 601.1 | 18.7 | 152.4 | 487.7 | 88.5 |
| Example 9 | 5.18 | 601.2 | 19.7 | 153.8 | 492.2 | 89.6 |
| Example 10 | 6.28 | 601.1 | 20.0 | 154.4 | 494.1 | 90.5 |
| Example 11 | 7.40 | 601.2 | 20.6 | 155.1 | 496.3 | 91.3 |
| Example 12 | 9.73 | 601.3 | 21.2 | 156.1 | 499.5 | 92.6 |
| Example 13 | 10.93 | 601.2 | 21.1 | 155.8 | 498.6 | 92.1 |
| Example 14 | 17.36 | 601.1 | 23.5 | 154.4 | 494.1 | 91.1 |
| Example 15 | 24.59 | 601.3 | 25.6 | 152.9 | 489.3 | 89.2 |

It can be seen from the test results in Table 2 that as the ω_{Mn}/ω_{Fe} value increases, the full width at half maximum of the third characteristic peak of the positive electrode active material gradually increases. Within a certain range, a larger ω_{Mn}/ω_{Fe} value indicates a better specific discharge capacity and high-temperature cycling stability of the electrochemical device. However, if the content of Mn is too high, Mn will dissolve during the cycle charging and discharging of the electrochemical device at 45°C, which will affect the high-temperature cycling performance of the electrochemical device.

**Table 3**

| | Percentage of fluoroethylene carbonate | Percentage of lithium difluorophosphate | Retention rate after 1000 cycles at 45°C (%) |
|---|---|---|---|
| Example 1 | / | / | 92.5 |
| Example 16 | 2% | 1.0% | 94.6 |
| Example 17 | 2% | 1.5% | 94.1 |
| Example 18 | 2% | 0.5% | 93.9 |
| Example 19 | 2% | 0.1% | 93.5 |
| Example 20 | 0.1% | 1.0% | 93.3 |
| Example 21 | 1.2% | 1.0% | 93.7 |
| Example 22 | 3.2% | 1.0% | 94.3 |
| Example 23 | 4.9% | 1.0% | 93.4 |
| Example 24 | 2% | / | 92.9 |
| Example 25 | / | 1.0% | 93.0 |

It can be seen from the test results of Example 1 and Examples 16 to 25 in Table 3 that when the electrolyte contains both the additives fluorinated carbonate and/or inorganic lithium salt, the retention rate of the electrochemical device after 1000 cycles at 45°C is higher than that of Example 1 without the above additives. The foregoing results show that the additives in the electrolyte can form an interface film on the surface of the positive electrode material, enhancing the protection of the positive electrode active material, inhibiting side reactions between the electrolyte and the positive electrode active material, reducing interface impedance, and further improving the high-temperature cycling performance of the electrochemical device.

In summary, with the synergistic effect of the first positive electrode active material and the second positive electrode active material containing aluminum, the gram capacity of the positive electrode active material can be greatly increased, increasing the energy density of the electrochemical device and improving the high-temperature cycling performance of the electrochemical device.

The foregoing descriptions are merely specific embodiments of this application, but are not intended to limit the protection scope of this application. Any equivalent modifications or replacements readily figured out by persons skilled in the art within the technical scope disclosed in this application shall fall within the protection scope of this application. Therefore, the protection scope of this application shall be subject to the protection scope of the claims.

## Claims

1. An electrochemical device, comprising:
a positive electrode, a negative electrode, and an electrolyte; wherein
the positive electrode comprises a positive electrode active material layer, the positive electrode active material layer comprises a positive electrode active material, and the positive electrode active material comprises a first positive electrode active material and a second positive electrode active material;
after the electrochemical device is fully discharged, a Raman spectrum of the positive electrode active material layer has a first characteristic peak at a wavelength ranging from 398 cm⁻¹ to 408 cm⁻¹ and a second characteristic peak at a wavelength ranging from 940 cm⁻¹ to 960 cm⁻¹; and
the second positive electrode active material comprises element aluminum.

2. The electrochemical device according to claim 1, wherein after the electrochemical device is fully discharged, the Raman spectrum of the positive electrode active material layer has a third characteristic peak at a wavelength ranging from 591 cm⁻¹ to 611 cm⁻¹, and a full width at half maximum of the third characteristic peak is 15 cm⁻¹ to 60 cm⁻¹.

3. The electrochemical device according to claim 1, wherein a full width at half maximum of the first characteristic peak is 15 cm⁻¹ to 60 cm⁻¹, and a full width at half maximum of the second characteristic peak is 5 cm⁻¹ to 25 cm⁻¹; and
the full width at half maximum of the first characteristic peak is greater than the full width at half maximum of the second characteristic peak.

4. The electrochemical device according to claim 1, wherein the first positive electrode active material comprises element iron, and the second positive electrode active material comprises element manganese.

5. The electrochemical device according to claim 1, wherein the positive electrode active material layer comprises element manganese, and based on a mass of the element manganese in the positive electrode active material layer, a mass fraction ω_{Al} of the element aluminum meets: 0.1% ≤ ω_{Al} ≤ 5%.

6. The electrochemical device according to claim 4, wherein based on a mass of the positive electrode active material layer, a mass percentage ω_{Mn} of the element manganese and a mass percentage ω_{Fe} of the element iron meet 0.01% ≤ ω_{Mn}/ω_{Fe} ≤ 30%.

7. The electrochemical device according to claim 1, wherein the positive electrode active material layer comprises element M, and the element M is selected from one or more of Nb, Mg, Ti, W, Ga, Zr, Y, V, Sr, Mo, Cr, Sn, La, and Ce; and
based on a mass of the positive electrode active material layer, a mass percentage ω_{M} of the element M meets 0.03% < ω_{M} ≤ 2.5%.

8. The electrochemical device according to claim 1, wherein the electrolyte comprises an additive, and the additive comprises fluorinated carbonate and/or an inorganic lithium salt; and
based on a mass of the electrolyte, a mass percentage of the additive is 0.01% to 10%.

9. The electrochemical device according to claim 8, wherein the additive meets at least one of conditions (1) to (4):
(1) the fluorinated carbonate comprises at least one of fluoroethylene carbonate or fluoropropylene carbonate;
(2) the inorganic lithium salt comprises at least one of lithium difluorophosphate or lithium tetrafluoroborate;
(3) based on the mass of the electrolyte, a mass percentage of the fluorinated carbonate is 0.01% to 8%; or
(4) based on the mass of the electrolyte, a mass percentage of the inorganic lithium salt is 0.01% to 3%.

10. The electrochemical device according to claim 8 or 9, wherein the additive meets at least one of condition (5) or (6):
(5) based on the mass of the electrolyte, a mass percentage of the fluorinated carbonate is 0.01% to 5%; or
(6) based on the mass of the electrolyte, a mass percentage of the inorganic lithium salt is 0.01% to 1.5%.

11. The electrochemical device according to any one of claims 1 to 10, meeting at least one of conditions (7) to (9):
(7) based on the mass of the element manganese in the positive electrode active material layer, a mass fraction ω_{Al} of the element aluminum meets: 0.3% ≤ ω_{Al} ≤ 3%;
(8) based on the mass of the positive electrode active material layer, a mass percentage ω_{Mn} of the element manganese and a mass percentage ω_{Fe} of the element iron meet: 1% ≤ ω_{Mn}/ω_{Fe} ≤ 25%; or
(9) based on the mass of the positive electrode active material layer, a mass percentage ω_{M} of the element M meets: 0.03% < ω_{M} ≤ 1.5%.

12. An electronic device, comprising the electrochemical device according to any one of claims 1 to 11.
